**Europäisches Patentamt**

**European Patent Office**

**Office européen des brevets**

(19)

(11) Publication number: **0 253 782**
B1

# EUROPEAN PATENT SPECIFICATION

(12)

(45) Date of publication of the patent specification:
**09.05.90**

(51) Int. Cl.⁵: **F16H 3/08**

(21) Application number: **87830265.2**

(22) Date of filing: **09.07.87**

(54) Gearbox with permanently-meshed gears for commercial vehicles.

(30) Priority: **16.07.86 IT 5363686 U**

(43) Date of publication of application:
**20.01.88 Bulletin 88/3**

(45) Publication of the grant of the patent:
**09.05.90 Bulletin 90/19**

(84) Designated Contracting States:
**DE FR GB SE**

(56) References cited:
**US-A- 2 633 753**
**US-A- 4 297 906**

(73) Proprietor: **IVECO FIAT S.p.A., Via Puglia 35,**
**I-10156 Torino(IT)**

(72) Inventor: **Pigozzi, Gian Maria, Via Pascoli 19,**
**I-25100 Brescia(IT)**

(74) Representative: **Buzzi, Franco et al, c/o**
**Jacobacci-Casetta & Perani S.p.A. Via Alfieri, 17,**
**I-10121 Torino(IT)**

## Description

The present invention relates to a gearbox according to the first part of the unique claim.

In the US-A 4 297 906 is disclosed a five speed gearbox wherein a lighter gearbox casing is obtainable, by arranging the longitudinal thrust at the input shaft, due to helical gears, to be directed inwardly of the gearbox.

The object of the present invention is to provide a gearbox of the type defined above which is arranged, unlike known gearboxes of the same type, to provide a transmission ratio of 1:1 (direct drive) in the condition of engagement of the highest forward gear ratio, while allowing a grid of the type wherein the position for the highest forward gear ratio is opposite and on the same line of movement as the position for the reverse gear ratio.

According to the invention, this object is achieved by the known gearbox having the further features of the second part of the unique claim.

The invention will now be described with reference to the appended drawings, provided purely by way of non-limiting example, in which:

Figure I is a schematic longitudinal sectional view of a gearbox with permanently-meshed gears for commercial vehicles, according to the invention, and

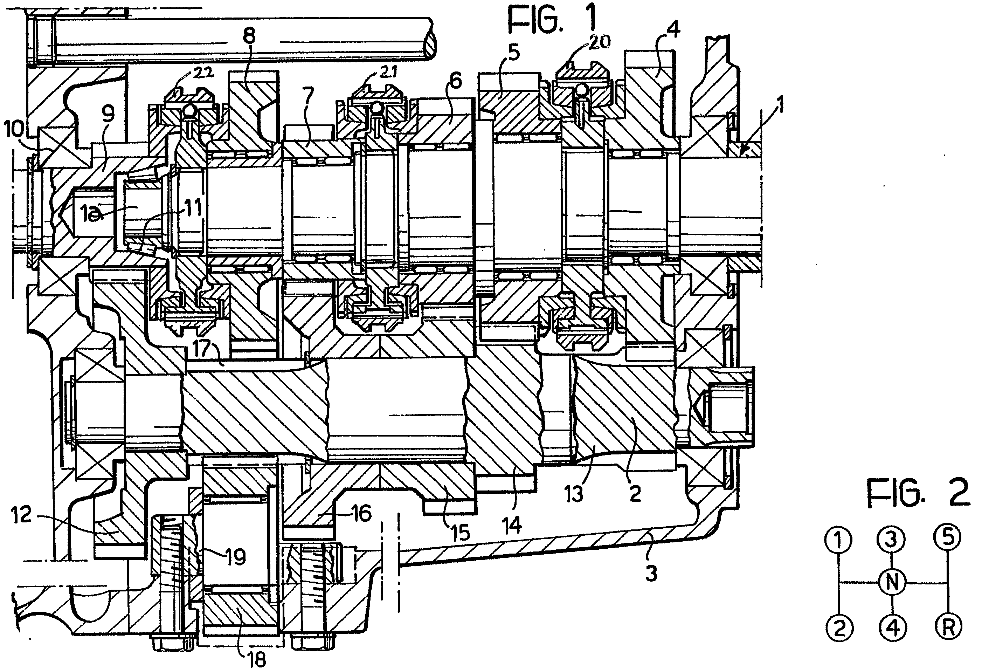

Figure 2 is a diagram showing the grid of movement of the control lever of the gearbox.

Figure I illustrates, by way of example, a gearbox with permanently-meshed gears for commercial vehicles with five forward gear ratios and a ratio for reverse. The gearbox is of generally known type and for the purpose of the present invention it suffices to say that it includes a shaft I and a countershaft 2 which are parallel to each other and supported for rotation by a housing 3.

The shaft I supports a series of six idle gears 4,5,6,7,8 and 9 disposed successively and corresponding respectively to the first, second, third and fourth gear ratios for forward movement, the gear ratio for reverse, and the fifth gear ratio for forward movement. The gears 8 and 9 corresponding respectively to the reverse gear ratio and the fifth forward gear ratio are arranged in a facing condition at the input end of the shaft I, that is, the end to which drive is transmitted from the engine of the vehicle. In effect, the input member of the gearbox according to the invention is itself constituted by the gear 9 corresponding to the highest forward gear ratio, which is mounted for rotation relative to the housing 3 at the end Ia of the shaft I by respective rolling bearings I0, II and is always meshed with a gear I2 rigid for rotation with the countershaft 2.

The gears 4, 5, 6 and 7 mesh respectively with gears I3, I4, I5 and I6 also rigid for rotation with the countershaft 2 to achieve the corresponding gear ratios.

The reverse gear 8, however, is coupled to a corresponding reverse gear I7 fixed for rotation with the countershaft 2 through a reverse idle gear I8, shown in dummy view in Figure I, supported for rotation by a reversing shaft I9.

To engage the various gear ratios available, three coupling sleeves 20, 2I and 22 slidable axially relative to the shaft I are provided and are arranged, in known manner, to render the gear 4 or the gear 5 (first and second forward gear ratios), the gear 6 or the gear 7 (third and fourth forward gear ratios), and the gear 8 or the gear 9 (reverse gear ratio and fifth foward gear ratio) rigid for rotation with the shaft I.

The three coupling sleeves 20, 2I and 22 are actuated in known manner by means of a gear lever movable manually into various positions corresponding to the various gear ratios available and disposed in a grid of the type in use in motor vehicles. This grid is shown schematically in Figure 2 in which I,2,3,4,5 indicate the positions of the lever in the five forward gear ratios, R the position corresponding to reverse, and N the neutral position. As is seen clearly, the positions corresponding to the fifth forward gear ratio and reverse are opposed along the same line of movement. This line of movement corresponds to the movement of the sleeve 22 towards the left and towards the right relative to the central position, illustrated in Figure I, to render the gear 9 or the gear 8 respectively rigid with the shaft I.

The arrangement described above, and particularly the location of the gears 8 and 9 in correspondence with the input side Ia of the shaft I, enables the gearbox to achieve with a I:I transmission ratio (direct drive) in the fifth gear ratio with the car-type grid illustrated in Figure 2.

Although the invention has been described with reference to a mechanical gearbox with five forward gear ratios, it also applies to gearboxes of different types, even non-mechanical, with the same or different numbers of ratios.

## Claims

1. Gearbox with permanently-meshed gears for commercial vehicles, of the type including an input gear (9) and a main shaft (1), wherein the input gear (9) is suitable for being coupled directly to the main shaft (1), so that the highest forward gear ratio is a 1:1 transmission ratio (direct drive) and at least one countershaft (2) carrying pairs of gears corresponding to a plurality of ratios for forward movement and a ratio for reverse; in which each pair of gears comprises an idle gear (4–8) mounted on the main shaft (1) and a gear (13–17) fixed for rotation with the countershaft (2), the idle gears having associated slidable coupling sleeves (20, 21, 22) movable selectively to couple the idle (4–8) for rotation with the main shaft (1) by means of a gear lever movable manually into various positions corresponding to the different gear ratios available and disposed in grid of the type in use in motor vehicles, characterized in that the position in the grid for the highest forward gear ratio (5th) is opposite and on the same line of movement as the position for the reverse gear ratio (R), in that the engagement of the highest forward gear ratio and the reverse gear ratio is achieved by means of the same coupling sleeve (22) and in that the input gear (9) of the highest forward gear ratio and the idle gear (8) for reverse are disposed in a facing condition at the drive input end (1a) of the gear main shaft (1).

**Revendications**

1. Boîte de vitesses à engrenages constamment en prise pour véhicules utilitaires, du type comprenant un engrenage d'entrée (9) et un arbre principal (1), dans lequel l'engrenage d'entrée (9) est prévu pour être couplé directement à l'arbre principal (1), de sorte que le rapport le plus élevé de la marche avant est un rapport de transmission 1:1 (entraînement direct), et comprenant au moins un arbre d'entraînement (2) portant des paires d'engrenages correspondant à une pluralité de rapports pour un movement vers l'avant er à un rapport pour la marche arrière; dans laquelle chaque paire d'engrenages comporte un engrenage libre (4–8) monté sur l'arbre principal (1) et un engrenage (13–17) fixe pour tourner aves l'arbre d'entraînement (2), les engrenages libres étant pourvus de manchons de couplage coulissants associés (20, 21, 22) pouvant être déplacés de manière sélective pour coupler les engrenages libres (4–8) et tourner avec l'arbre principal (1) au moyen d'un levier de commande d'engrenages actionnable à la main er pouvant être placé dans différentes positions correspondant aux différents rapports d'engrenage disponibles et disposés selon une grille du type utilisé dans des véhicules à moteur, caractérisée en ce que la position du rapport d'engrenage le plus élevé pour la marche avant (cinquième) dans la grille est à l'opposé er sur la même ligne de mouvement que la position du rapport d'engrenage pour la marche arrière (R), en ce que le rapport d'engrenage le plus élevé pour la marche avant et le rapport d'engrenage pour la marche a_rrière sont mis en prise au moyen du même manchon de couplage (22) et en ce que l'engrenage d'entrée (9) du rapport d'engrenage le plus élevé pour la marche avant et l'engrenage libre (8) pour la marche arrière sont disposés face-à-face à l'extrémité d'entrée d'entraînement (1a) de l'arbre principal (1) d'engrenage.

**Patentansprüche**

1. Getriebe mit dauernd in Eingriff stehenden Zahnrädern für Nutzfahrzeuge, mit einem Antriebszahnrad (9) und einer Hauptwelle (1), die mit dem Antriebszahnrad (9) direkt kuppelbar ist, so daß der höchste Vorwärtsgang eine 1:1-Übersetzung (direkter Gang) ist, mit wenigstens einer Vorgelegewelle (2), sowie mit von den Wellen getragenen, mehreren Übersetzungsverhältnissen für die Vorwärtsgänge und einem Übersetzungsverhältnis für den Rückwärtsgang entsprechenden Zahnräderpaaren, von denen jedes ein auf der Hauptwelle (1) leerlaufend montiertes Zahnrad (4–8) und ein drehfest mit der Vorgelegewelle (2) verbundenes Zahnrad (13–17) umfasst, wobei den leerlaufenden Zahnrädern Schiebemuffen (20, 21, 22) zugeordnet sind, die mit Hilfe eines Gangschalthebels, der manuell in die den zur Verfügung stehenden und in einem Schaltschema der in Kraftfahrzeugen üblichen Art angeordneten Gängen entsprechenden unterschiedlichen Positionen bewegbar ist, selektiv verschiebbar sind, um die jeweiligen leerlaufenden Zahnräder (4–8) drehfest mit der Hauptwelle (1) zu kuppeln, dadurch gekennzeichnet, daß die Position für den höchsten Vorwärtsgang (5) und die Position für den Rückwärtsgang (R) in dem Schaltschema in entgegengesetzten Positionen in und auf derselben Bewegungslinie angeordnet sind, daß das Einlegen des höchsten Vorwärtsgangs und des Rückwärtsgangs mit ein und derselben Schiebemuffe (22) durchgeführt wird und daß das Antriebszahnrad (9) des höchsten Vorwärtsgangs und das leerlaufende Zahnrad (8) für den Rückwärtsgang einander gegenüberliegend auf dem antriebsseitigen Endbereich (1a) der Hauptwelle (1) angeordnet sind.

FIG. 1

FIG. 2

EP 0 253 782 B1